# EUROPEAN PATENT SPECIFICATION

(11) **EP 3 070 311 B1**
(45) Date of publication and mention of the grant of the patent: **14.03.2018**
(21) Application number: 16160412.9
(22) Date of filing: 15.03.2016
(51) Int. Cl.: F02D 41/40

(54) **MONITORING DEVICE FOR ENGINE CONTROL UNIT**
ÜBERWACHUNGSVORRICHTUNG FÜR EINE MOTORSTEUEREINHEIT
DISPOSITIF DE SURVEILLANCE POUR UNITÉ DE COMMANDE DE MOTEUR

(30) Priority: 19.03.2015 JP 2015055731
(43) Date of publication of application: 21.09.2016
(73) Proprietor: Toyota Jidosha Kabushiki Kaisha, Toyota-shi, Aichi 471-8571 (JP)
(72) Inventor: SAKAMOTO, Morihisa, Aichi-Ken, Aichi 471-8571 (JP); INAMASU, Takuya, Aichi-Ken, Aichi 471-8571 (JP); ITO, Yoshiyasu, Aichi-Ken, Aichi 471-8571 (JP)
(74) Representative: D Young & Co LLP

(56) References cited:
- EP-A1- 2 083 159
- WO-A1-2013/171575
- DE-A1-102012 100 021

## Description

### Technical Field

The present invention relates in general to a monitoring device for an engine control unit and in particular to a monitoring device that monitors whether or not fuel injection amount control is being normally performed.

### Background Art

In conventional engines for automobiles and like vehicles, fuel injection amount control is performed to generate an engine output in response to driver requests and other requirements. This fuel injection amount control is implemented by an engine control unit containing a microcomputer that carries out computational processes and an electric driving unit ("EDU") that drives an injector.

In the fuel injection amount control, the microcomputer computes a required injection amount and also computes a necessary supply period of an injector driving current to achieve the required injection amount. This current supply period information is transmitted to the EDU, which then causes the driving current to flow through the injector during the current supply period determined according to the information. Thus, the injector injects fuel.

Patent Document 1 discloses a monitoring device that monitors whether or not fuel injection amount control is being normally performed. According to Patent Document 1, the EDU transmits, to a microcomputer, an injection monitoring signal (pulse signal) generated upon a detection of a driving current flowing in an injector. Specifically, the injection monitoring signal falls in response to a rise of the driving current (an injection instructing signal from the EDU going ON), whereas the injection monitoring signal rises in response to a fall of the driving current (the injection instructing signal from the EDU going OFF). Next, a fuel injection period is calculated from the timing of the fall of the injection monitoring signal (substantially the same timing as a fuel injection starting time) and the timing of the rise of the injection monitoring signal (substantially the same timing as a fuel injection ending time). A fuel injection amount determined from the calculated fuel injection period (a fuel injection amount determined from the fuel injection period and a fuel pressure) is then compared with a required fuel injection amount in order to monitor whether or not the fuel injection amount control is being normally performed.

### Citation List

### Patent Document

Patent Document 1: JP 2013-238203 A

WO 2013/171575 A1 relates to a diagnostic method and apparatus for an internal combustion engine.

### Summary of the Invention

### Problems to Be Solved by the Invention

The technology disclosed in Patent Document 1 however has the following problems.

Preferably, the microcomputer needs to use as few input ports as possible in the aforementioned monitoring (to determine whether or not the fuel injection amount control is being normally performed). In other words, the microcomputer is preferably configured to use only one input port to receive the injection monitoring signal from the EDU.

With only one input port being provided as above, if the level of the injection monitoring signal from the EDU (hereinafter, the "port level") changes (if there occurs an edge-triggered interrupt call in the injection monitoring signal), there will be a processing delay from the time when the port level of the injection monitoring signal changes (the time when there occurs an edge-triggered interrupt call) until the time when the port level of the injection monitoring signal is identified as either Hi (a rise of the injection monitoring signal) or Lo (a fall of the injection monitoring signal) (the processing delay time is the period from the time of occurrence of the edge-triggered interrupt call to the time when the port level is identified). Therefore, if the port level of the injection monitoring signal, after a change of the port level, changes again within a short period of time, and if this port level changing period (the period from the time when the port level changes to the time when the port level changes again) is shorter than the processing delay time, the port level of the injection monitoring signal may not be able to be accurately identified, and the fuel injection amount may not be able to be accurately calculated. The following will describe these problems more specifically.

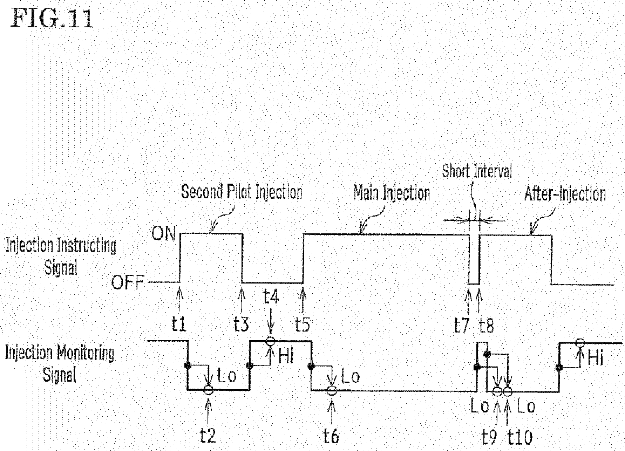

Figure 11 is a timing chart illustrating an example of changes of an injection instructing signal and an injection monitoring signal in conventional art. Figure 11 shows an occurrence of a short interval (the EDU is outputting an injection instructing signal with an extremely short fuel-injection-suspending period in multiple fuel injection).

According to the waveforms in this Figure 11, the injection instructing signal goes ON (the driving current rises) at time t1 in the figure, and the injection monitoring signal falls in response to this (with a slight delay). At this timing, the time of occurrence of this edge-triggered interrupt call is stored. Subsequently to the occurrence of the edge-triggered interrupt call, the port level of the injection monitoring signal is identified as Lo with a processing delay time (i.e., at time t2 in the figure). Accordingly, the time of occurrence of the edge-triggered interrupt call (the stored time) is read in as a fuel injection starting time. Furthermore, the injection instructing signal goes OFF (the driving current falls) at time t3 in the figure, and the injection monitoring signal rises in response to this (with a slight delay). At this timing, the time of occurrence of this edge-triggered interrupt call is stored. Subsequently to the occurrence of the edge-triggered interrupt call, the port level of the injection monitoring signal is identified as Hi with a processing delay time (i.e., at time t4 in the figure). Accordingly, the time of occurrence of the edge-triggered interrupt call (the stored time) is read in as a fuel injection ending time. Likewise, the injection instructing signal goes ON again at time t5 in the figure, and the port level of the injection monitoring signal is identified as Lo at time t6 in the figure. Accordingly, the time of occurrence of the edge-triggered interrupt call corresponding to time t5 is read in as a fuel injection starting time.

Next, as shown from time t7 to time t8 in the figure, the injection instructing signal goes ON (at time t8) within a short period of time (that is shorter than the processing delay time) after the injection instructing signal goes OFF (at time t7). Where this short interval occurs, the injection monitoring signal rises (in response to the injection instructing signal going OFF at time t7) and then falls (at time t9) before the processing delay time elapses. Consequently, the port level of the injection monitoring signal is identified as Lo for the edge-triggered interrupt call corresponding to time t7. In addition, the port level of the injection monitoring signal is identified again as Lo (at time t10) when the processing delay time elapses after the injection monitoring signal falls (in response to the injection instructing signal going ON at time t8).

In an ordinary fuel injecting operation, the fuel injection starting time and the fuel injection ending time appear alternately, the port level of the injection monitoring signal hence alternates between Lo and Hi. However, as illustrated above, where the short interval occurs, the port level of the injection monitoring signal may be identified successively as Lo for continual edge-triggered interrupt calls (see times t6, t9, t10), in which case, the fuel injection period may not be able to be accurately calculated, and the fuel injection amount may therefore not be able to be accurately calculated. For example, the time of occurrence of the edge-triggered interrupt call corresponding to time t7 may be read in incorrectly as a fuel injection starting time, and the fuel injection amount may be calculated using information related to this fuel injection starting time and information related to the fuel injection ending time deduced from the time of occurrence of the edge-triggered interrupt call corresponding to time t3. If the fuel injection amount is not accurately calculated as described here, the fuel injection amount control, although being normally performed, may be incorrectly determined as not being normally performed.

A similar situation can occur not only where the short interval occurs, but also where the EDU outputs an injection instructing signal with an extremely short (shorter than the processing delay time) fuel injection period (period from the start to the end of a fuel injection).

In view of these problems, it is an object of the present invention to provide a monitoring device for an engine control unit, the monitoring device being capable of accurately calculating a fuel injection amount even if the port level of an injection monitoring signal changes within a short period of time.

### Solution to Problems

The present invention offers a solution to the problems in order to achieve the object. The solution presumes the use of a monitoring device for an engine control unit. The monitoring device is configured to monitor, by comparing a required fuel injection amount determined according to an operation state of an internal combustion engine and a monitored injection amount calculated using an injection monitoring signal generated from a supply period of a driving current for a fuel injecting valve, whether or not fuel injection amount control is being normally performed. The monitoring device includes: injection monitoring signal outputting means configured to output the injection monitoring signal with a signal level switching from Lo to Hi or from Hi to Lo in response to a switching of the driving current between a value at which fuel injection from the fuel injecting valve is performed and a value at which the fuel injection is suspended; and a central processing unit with an input port receiving the injection monitoring signal from the injection monitoring signal outputting means. In addition, the central processing unit includes: time acquiring means, port level detecting means, port level storing means, injection amount calculating means, and monitoring means. The time acquiring means is configured to acquire a time at which a port level, which is the signal level of the injection monitoring signal received by the input port, has switched from Lo to Hi or from Hi to Lo. The port level detecting means is configured to detect a port level at a certain delay after the switching from Lo to Hi or from Hi to Lo of the port level of the injection monitoring signal received by the input port. The port level storing means is configured to store, in response to a detection of the port level after the switching by the port level detecting means, either the port level after the switching or a flag value that is set in accordance with the port level after the switching. The injection amount calculating means is configured to calculate the monitored injection amount based on the time acquired by the time acquiring means and an injection period calculated from the port level detected by the port level detecting means. The monitoring means is configured to monitor, by comparing the monitored injection amount calculated by the injection amount calculating means and the required fuel injection amount, whether or not the fuel injection amount control is being normally performed. The central processing unit is configure to acquire, by the time acquiring means, a time at which the port level of the injection monitoring signal has switched from Hi to Lo as a fuel injection starting time, and to acquire, by the time acquiring means, a time at which the port level of the injection monitoring signal has switched from Lo to Hi as a fuel injection ending time, so as to calculate the injection period based on the fuel injection starting time and the fuel injection ending time acquire by the time acquiring means. The central processing unit is configured to, when the port level of the injection monitoring signal received by the input port has switched from Lo to Hi or from Hi to Lo: establish the time acquired by the time acquiring means as a time to be used to calculate the injection period if the port level detected by the port level detecting means differs from either the port level currently stored in the port level storing means or the port level corresponding to the flag value currently stored in the port level storing means; and not use the time acquired by the time acquiring means to calculate the injection period if the port level detected by the port detecting means matches either the port level currently stored in the port level storing means or the port level that is in accordance with the flag value currently stored in the port level storing means.

According to this configuration, subsequently to a switching between Lo and Hi of the port level of the injection monitoring signal received by the input port of the central processing unit, the time acquired by the time acquiring means is established as a time to be used to calculate the injection period if the port level detected by the port level detecting means differs from either the port level currently stored in the port level storing means or the port level corresponding to the flag value currently stored in the port level storing means. More specifically, the time when the port level of the injection monitoring signal has switched between Lo and Hi is read in as either a fuel injection starting time or a fuel injection ending time, depending on the port level of the injection monitoring signal received by the input port. An injection period is then calculated using these two time readings (a fuel injection starting time and a fuel injection ending time). A monitored injection amount is calculated based on the injection period. The monitored injection amount is used to monitor whether or not the fuel injection amount control is being normally performed.

On the other hand, subsequently to a switching between Lo and Hi of the port level of the injection monitoring signal received by the input port of the central processing unit, the time acquired by the time acquiring means is not used to calculate the injection period (i.e., the time when the port level of the injection monitoring signal switches between Lo and Hi is not read in as the fuel injection starting time or the fuel injection ending time) if the port level detected by the port level detecting means matches with either the port level currently stored in the port level storing means or the port level corresponding to the flag value currently stored in the port level storing means. Therefore, where the port level of the injection monitoring signal changes more than once within a short period of time, if the port level changes for the second time before a detection of the port level by the port level detecting means because of a processing delay that occurs in identifying the port level, no time is read in as these times (the fuel injection starting time and the fuel injection ending time) (no time is read in as a time to be used to calculate the injection period). Accordingly, the port level of the injection monitoring signal appears to alternate between Lo and Hi as identified for particular times to be used to calculate the injection period (those times which are acquired by the time acquiring means and established as times to be used to calculate the injection period). Hence, the fuel injection period is prevented from being calculated inaccurately due to the port level of the injection monitoring signal being identified identically for the times that are read in continually. As a result, the fuel injection amount can be accurately calculated, thereby circumventing incorrect determination/identification.

The central processing unit is preferably configured to, upon establishing the time acquired by the time acquiring means as the time to be used to calculate the injection period, switch either the port level that the port level storing means stores or the flag value that is set in accordance with that port level.

Hence, the port level or the flag value that is set in accordance with the port level is always set to a proper value.

### Advantageous Effects of the Invention

According to the present invention, subsequently to a switching between Lo and Hi of the port level of the injection monitoring signal, the time of occurrence of the port level switching is used to calculate the injection period only if the detected port level differs from either the currently stored port level or the port level that is in accordance with the flag value. Therefore, even if the port level of the injection monitoring signal changes more than once within a short period of time, the port level of the injection monitoring signal appears to alternate between Lo and Hi as identified for particular times to be used to calculate the injection period, and the fuel injection amount can be accurately calculated.

### Brief Description of Drawings

Figure 1 is a schematic diagram of a configuration of an engine control unit and an engine fuel supply system in accordance with an embodiment.
Figure 2 is a diagram illustrating a flow of processes related to fuel injection amount control and fuel injection monitoring implemented by an engine control unit.
Figure 3 is a flow chart depicting steps in a first malfunction determining routine.
Figure 4 is a functional block diagram showing a configuration for implementing an actual current supply period measuring process, as well as showing an injection amount calculating process and a second malfunction determining process.
Figure 5 is a timing chart illustrating, as an example for a case where no short interval occurs, changes of a crank angle signal, an injection instructing signal, a fuel injection ratio, and an injection monitoring signal and injection time acquiring timings.
Figure 6 is a flow chart depicting steps in a monitored injection amount calculating routine.
Figure 7 is a diagram showing a relationship between a current supply monitoring period INJM and a monitored injection amount QM for various values of an injection pressure Pcrinj.
Figure 8 is a flow chart depicting steps in a second malfunction determining routine.
Figure 9 is a flow chart depicting steps in a data acquisition permission flag switching process and an injection time reading process.
Figure 10 is a timing chart illustrating, as an example for a case where a short interval occurs, changes of a crank angle signal, an injection instructing signal, a fuel injection ratio, an injection monitoring signal, and a data acquisition permission flag and injection time acquiring timings.
Figure 11 is a timing chart illustrating, as an example for a case where a short interval occurs, changes of an injection instructing signal and an injection monitoring signal in conventional art.

### Description of Embodiments

The following will describe an embodiment of the present invention in reference to drawings. The present embodiment will illustrate an application of the present invention to an engine control unit for a diesel engine (internal combustion engine) in a vehicle.

### Overall Configuration of Engine Control Unit and Fuel Supply System

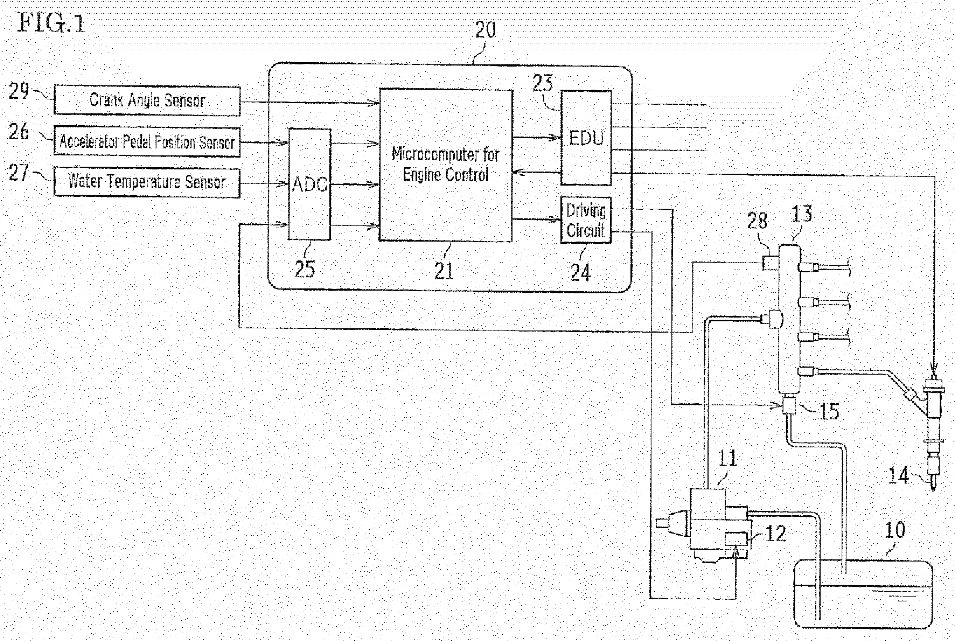

Figure 1 is a schematic diagram of a configuration of an engine control unit and an engine fuel supply system in accordance with the present embodiment. As illustrated in this Figure 1, the engine fuel supply system includes a fuel pump 11 that pressurizes and ejects fuel drawn from a fuel tank 10. The fuel pump 11 is provided with a pressure control valve ("PCV") 12 that regulates the pressure of the fuel ejected from the fuel pump 11. The fuel ejected from the fuel pump 11 is transferred under pressure to a common rail 13 and stored inside the common rail 13. The fuel stored in the common rail 13 is distributed (supplied) to an injector (fuel injecting valve) 14 of each cylinder. The common rail 13 is provided with a pressure reducing valve 15. When the pressure reducing valve 15 is open, the fuel in the common rail 13 flows back to the fuel tank 10, reducing fuel pressure (rail pressure) in the common rail 13.

The engine, including the fuel supply system, is controlled by the engine control unit 20. The engine control unit 20 includes a microcomputer (central processing unit) 21, an electric driving unit ("EDU") 23, and a driving circuit 24. The microcomputer 21 carries out various computational processes for engine control. The EDU (injection monitoring signal outputting means) 23 drives the injectors 14 according to instructions from the microcomputer 21. The driving circuit 24 drives the PCV 12 and the pressure reducing valve 15 according to instructions from the microcomputer 21.

Meanwhile, the engine control unit 20 receives incoming detection signals from various sensors, such as an accelerator pedal position sensor 26, a water temperature sensor 27, a rail pressure sensor 28, and a crank angle sensor 29. The accelerator pedal position sensor 26 detects an accelerator pedal operation amount ACCP. The water temperature sensor 27 detects an engine water temperature THW. The rail pressure sensor 28 detects a rail pressure PCR. The crank angle sensor 29 outputs a pulsed crank angle signal in accordance with the rotation of an engine output shaft. The engine control unit 20 is provided with an A/D converter ("ADC") 25. Detection signals from the accelerator pedal position sensor 26, the water temperature sensor 27, and the rail pressure sensor 28 are converted to digital signals by the A/D converter 25 before being fed to the microcomputer 21. The crank angle signal outputted from the crank angle sensor 29 is fed directly to the microcomputer 21.

The engine control unit 20, configured as described in the foregoing, performs fuel injection amount control as part of engine control. Next will be described the fuel injection amount control in more detail.

### Fuel Injection Amount Control

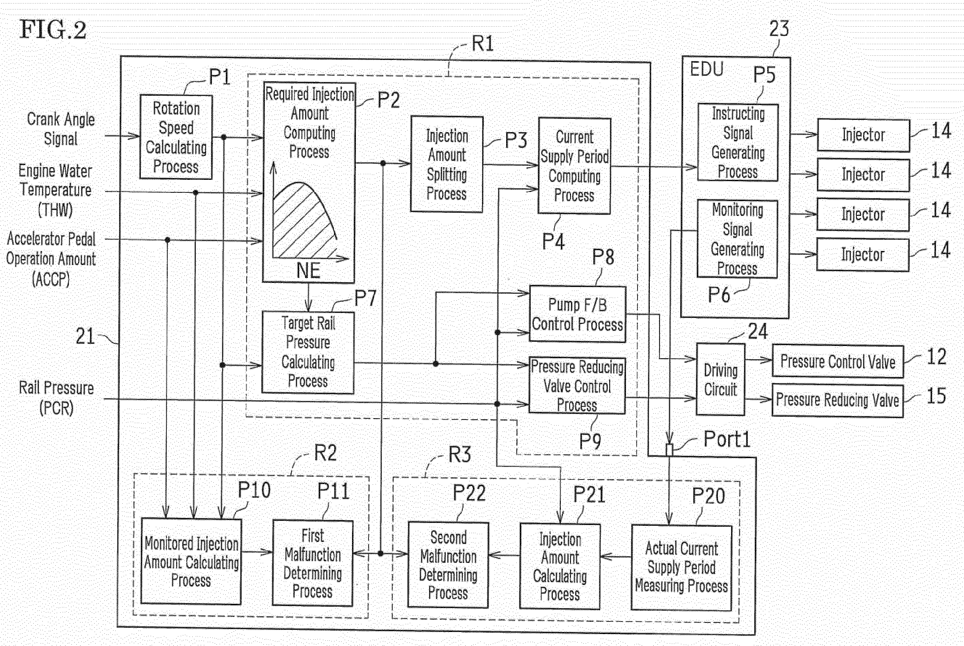

As shown in Figure 2, which is a diagram illustrating a flow of processes related to the fuel injection amount control and fuel injection monitoring implemented by the engine control unit 20, the microcomputer 21 carries out a fuel injection amount control routine R1 for the fuel injection amount control. In the fuel injection amount control routine R1, three processes are carried out to calculate a supply period τ of an injector driving current: a required injection amount computing process P2, an injection amount splitting process P3, and a current supply period computing process P4.

The required injection amount computing process P2 determines a required injection amount (required fuel injection amount) Qfin by computation according to the operation state of the engine, based on an engine rotation speed NE, the accelerator pedal operation amount ACCP, and other factors. To compute the required injection amount Qfin, a base injection amount Qbse is first calculated from the engine rotation speed NE and the accelerator pedal operation amount ACCP based on a base injection amount calculating map stored in the microcomputer 21. The map stores a relationship between the engine rotation speed NE and the base injection amount Qbse and a relationship between the accelerator pedal operation amount ACCP and the base injection amount Qbse. The computed base injection amount Qbse is then corrected with respect to the engine water temperature THW and other factors to compute the required injection amount Qfin.

The engine rotation speed NE is calculated in a rotation speed calculating process P1 based on the crank angle signal from the crank angle sensor 29.

Meanwhile, in the injection amount splitting process P3, the required injection amount Qfin is split among a pilot injection, a main injection, and an after-injection. An injection amount for each injection is determined in this manner. It is determined, in accordance with the current engine operation state, into how many injections the fuel injection should be split and what splitting ratio the injection amounts should have.

In the current supply period computing process P4, the supply period τ of the injector driving current is computed for each injection to achieve the determined injection amounts. The supply period τ for each injection is determined based on the injection amount and the rail pressure PCR for that injection. The microcomputer 21 then sends the EDU 23 an instruction related to the computed supply period τ for each injection.

The EDU 23, upon receiving this instruction, carries out an instructing signal generating process P5 based on the instructed supply period τ for each injection to generate an injection instructing signal. The injection instructing signal is generated to have a signal level that, upon a start of the supply period, increases to such a level that an electromagnetic valve of the injector 14 opens and, upon an end of the supply period, decreases to such a level that the electromagnetic valve no longer remains open. The generated injection instructing signal is fed to the injector 14 of the associated one of the cylinders (that is in the process of combustion).

The EDU 23 also carries out a monitoring signal generating process P6 to detect an electric current in the electromagnetic valve of each injector 14 and generate an injection monitoring signal from results of the detection. The injection monitoring signal is obtained from the supply period of the driving current supplied to the electromagnetic valve of the injector 14. The injection monitoring signal is generated as a pulsed signal with a "Lo" signal level while the driving current is being actually supplied (i.e., while the driving current has such a value that the injector 14 injects fuel) and a "Hi" signal level while the driving current is not being supplied (i.e., while the driving current has such a value that the injector 14 suspends fuel injection). The injection monitoring signal thus generated is fed to a single input port (interruption port) Port1 of the microcomputer 21.

### Injection Pressure Control

Next will be described injection pressure control that accompanies the fuel injection amount control described above.

The microcomputer 21 carries out a target rail pressure calculating process P7 to calculate a target rail pressure based on the engine rotation speed NE calculated in the rotation speed calculating process P1 and the required injection amount Qfin computed in the required injection amount computing process P2. The microcomputer 21 then carries out a pump feedback (F/B) control process P8 and a pressure reducing valve control process P9 based on the calculated target rail pressure and the actual rail pressure PCR detected by the rail pressure sensor 28.

In the pump F/B control process P8, a target opening degree for the PCV 12 is computed according to a discrepancy between the target rail pressure and the actual rail pressure PCR. The target opening degree thus computed is fed to the driving circuit 24. The driving circuit 24 then drives the PCV 12 in such a manner as to achieve the target opening degree, in order to regulate the ejection pressure of the fuel pump 11.

In the pressure reducing valve control process P9, the driving circuit 24 receives an instruction for actuating the pressure reducing valve 15 when the actual rail pressure PCR is higher than the target rail pressure. In response to this incoming actuation instruction, the driving circuit 24 lowers the rail pressure PCR by actuating the pressure reducing valve 15 to cause fuel to be discharged from the common rail 13.

The microcomputer 21, while performing the fuel injection amount control as described above, continuously monitors whether or not the control is being normally performed. In the present embodiment, this monitoring of the fuel injection amount control is implemented through two monitoring routines: a first monitoring routine R2 monitoring a function of the fuel injection amount control routine R1 that computes the required injection amount Qfin and a second monitoring routine R3 monitoring a function of the fuel injection amount control routine R1 that drives the injector 14 based on the required injection amount Qfin.

### First Monitoring Routine

In the first monitoring routine R2, it is determined whether or not the computation of the required injection amount Qfin has been normally carried out, based on a computed value of the required injection amount Qfin and detected values representing the engine operation state used in the computation of the required injection amount Qfin (the engine rotation speed NE, the accelerator pedal operation amount ACCP, and the engine water temperature THW).

As illustrated in Figure 2, the first monitoring routine R2 is implemented through two processes: a monitored injection amount calculating process P10 and a first malfunction determining process P 11.

In the monitored injection amount calculating process P10, the required injection amount (monitored required injection amount Qfinm) is calculated based on the engine rotation speed NE, the accelerator pedal operation amount ACCP, and the engine water temperature THW. In the first malfunction determining process P11, the monitored required injection amount Qfinm and the required injection amount Qfin are compared to determine whether or not the computation of the required injection amount Qfin has been normally performed. The monitored required injection amount Qfinm is calculated based on a monitored injection amount calculating map stored in the microcomputer 21.

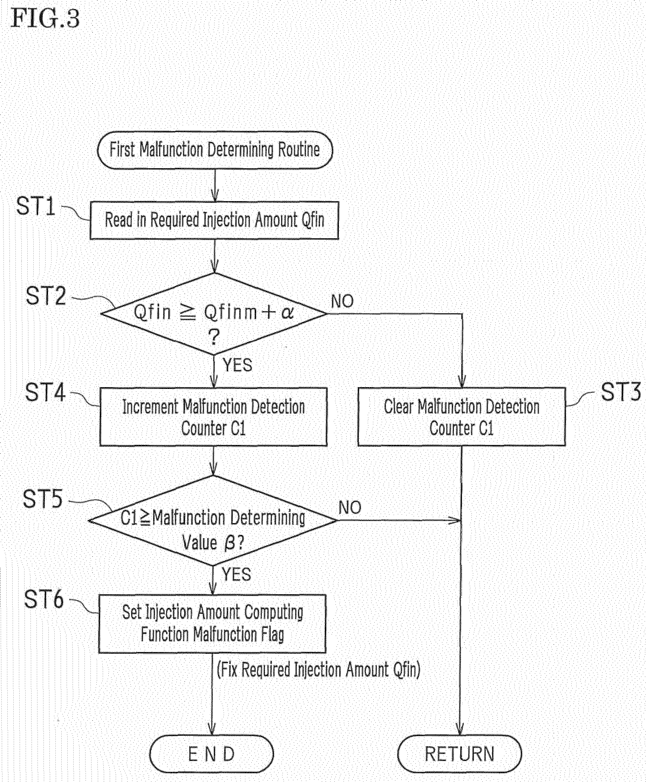

The first malfunction determining process P11 is implemented through a first malfunction determining routine shown in Figure 3.

As illustrated in Figure 3, the required injection amount Qfin is read in in step ST1. Next, in step ST2, the monitored required injection amount Qfinm and the required injection amount Qfin are compared. Excess values of the required injection amount Qfin are the only malfunction that necessitates a fail-safe process in the present embodiment. Therefore, in this embodiment, it is determined that there has occurred a discrepancy between the required injection amount Qfin and the monitored required injection amount Qfinm when the required injection amount Qfin is greater than the monitored required injection amount Qfinm by an amount that is greater than or equal to a prescribed value α (i.e., when Qfin ≥ Qfinm + α).

If the result of step ST2 is "NO," the value of a malfunction detection counter C1 denoting a period during which the discrepancy has been present is cleared in step ST3, before the routine returns.

If the result of step ST2 is "YES," the malfunction detection counter C1 is incremented in step ST4. It is then determined in step ST5 whether or not the malfunction detection counter C1 is greater than or equal to a prescribed malfunction determining value β. If the result of step ST5 is "NO," the routine simply returns.

On the other hand, if the result of step ST5 is "YES," an injection amount computing function malfunction flag is set in step ST6, before the current round of implementation of the routine is ended. At this timing, the microcomputer 21 stops computing the required injection amount Qfin and fixes the required injection amount Qfin to a prescribed value as the fail-safe process.

### Second Monitoring Routine

Next will be described the second monitoring routine R3 in detail. In the second monitoring routine R3, the amount of fuel actually injected by the injector 14 (the "actual fuel injection amount" or in the present invention, the "monitored injection amount") and the required injection amount Qfin computed in the fuel injection amount control routine R1 are compared. It is determined through this comparison whether or not the injector 14 has been normally driven based on the computed required injection amount Qfin. In this manner, the second monitoring routine R3 monitors whether or not the fuel injection amount control is being normally performed.

As illustrated in Figure 2, the second monitoring routine R3 is constituted by three processes: an actual current supply period measuring process P20, an injection amount calculating process P21, and a second malfunction determining process P22. In the actual current supply period measuring process P20, the supply period of the driving current for the injector 14 is measured based on the injection monitoring signal inputted from the EDU 23. In the injection amount calculating process P21, the actual fuel injection amount (monitored injection amount) of the injector 14 is calculated from the measured current supply period. In the second malfunction determining process P22, it is determined through a comparison of the calculated, actual fuel injection amount and the required injection amount Qfin computed in the fuel injection amount control routine R1 whether or not the injector 14 has been normally driven based on the required injection amount Qfin, that is, whether or not the fuel injection amount control is being normally performed.

The actual current supply period measuring process P20 will be first described in detail.

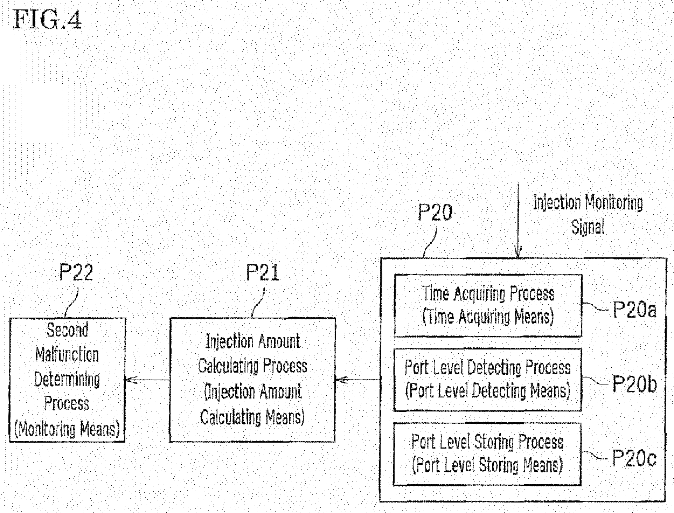

Figure 4 is a functional block diagram showing a configuration for implementing the actual current supply period measuring process P20, as well as showing the injection amount calculating process P21 and the second malfunction determining process P22. As illustrated in this Figure 4, a time acquiring process P20a, a port level detecting process P20b, and a port level storing process P20c are carried out in the actual current supply period measuring process P20.

The time acquiring process P20a acquires a time at which the signal level (port level) of the injection monitoring signal received at the single input port Port1 of the microcomputer 21 switches between Lo and Hi (a time of occurrence of an edge-triggered interrupt call in the injection monitoring signal). The time acquiring process P20a will be described later in detail. A processing part of the microcomputer 21 that implements the time acquiring process P20a is referred to as time acquiring means in the present invention.

The port level detecting process P20b detects a post-switching port level if the port level of the injection monitoring signal received at the input port Port1 switches between Lo and Hi (if there occurs an edge-triggered interrupt call in the injection monitoring signal). Actually, the injection monitoring signal is received at the single input port Port1 in the manner described earlier. Therefore, there will be a processing delay from the time when there occurs an edge-triggered interrupt call in the injection monitoring signal until the port level of the injection monitoring signal is identified as either Lo or Hi. Therefore, the port level is detected (identified) in the port level detecting process P20b after this processing delay. A processing part of the microcomputer 21 that implements the port level detecting process P20b is referred to as port level detecting means in the present invention.

The port level storing process P20c stores the port level of the injection monitoring signal received at the input port Port1. More specifically, if the post-switching port level is detected in the port level detecting process P20b, the port level storing process P20c stores the post-switching port level. In the present embodiment, the port level is not stored as is. Instead of the port level being stored as is, a data acquisition permission flag is stored that switches between ON and OFF in accordance with the port level (the data acquisition permission flag has a flag value that switches between ON and OFF in accordance with the port level). The data acquisition permission flag, the switching of the flag, and the reading of data using the flag (reading of data on a fuel injection starting time and a fuel injection ending time) will be described later in detail. A processing part of the microcomputer 21 that implements the port level storing process P20c is referred to as port level storing means in the present invention.

Now, the principles of the process that reads in the fuel injection starting time and a fuel injection suspending time ("injection time reading process") will be described.

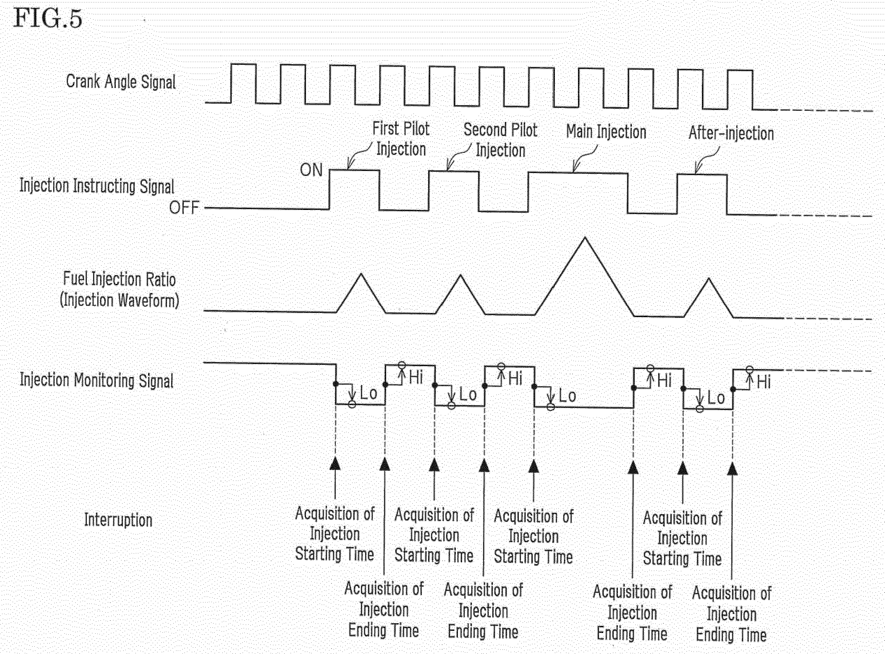

Figure 5 is a timing chart illustrating, as an example (for a case where no short interval (detailed later) is present), changes of the crank angle signal, the injection instructing signal, a fuel injection ratio, and the injection monitoring signal and injection time acquiring timings in a fuel injection.

As illustrated in this Figure 5, in each fuel injection, the signal level of the injection instructing signal outputted from the EDU 23 to the injector 14 rises. In response to the rise, the driving current flowing in the electromagnetic valve of the injector 14 rises with a slight delay from that rise to such a level that the electromagnetic valve can open, thereby starting fuel injection. The injection monitoring signal generated by the EDU 23 falls in response to the rise of the driving current. Thereafter, as the signal level of the injection instructing signal falls, the supply of the driving current to the electromagnetic valve of the injector 14 is suspended with a slight delay after the fall of the signal level, thereby suspending the fuel injection from the injector 14. The injection monitoring signal then rises in response to the suspension of the supply of the driving current.

In the time acquiring process P20a, an injection time is acquired as an interrupting process that is implemented in accordance with these fall and rise of the injection monitoring signal. In the port level detecting process P20b, the post-switching port level is detected after the injection monitoring signal switches between a rise and a fall. In this manner, the time when the injection monitoring signal has fallen is read in as the fuel injection starting time, and the time when the injection monitoring signal has risen is read in as the fuel injection suspending time.

Specifically, as the injection instructing signal goes ON, the injection monitoring signal falls in response to this (with a slight delay). At this timing, the time of occurrence of this edge-triggered interrupt call is stored (it is not determined whether the stored time is the fuel injection starting time or the fuel injection ending time because the port level of the injection monitoring signal is yet to be identified at this point in time). The port level of the injection monitoring signal is then identified as Lo with a processing delay time from the time of occurrence of the edge-triggered interrupt call. In this manner, the time of occurrence of the edge-triggered interrupt call (the stored time) is read in as the fuel injection starting time.

On the other hand, as the injection instructing signal goes OFF, the injection monitoring signal rises in response to this (with a slight delay). At this timing, the time of occurrence of this edge-triggered interrupt call is stored (it is not determined whether the stored time is the fuel injection starting time or the fuel injection ending time because the port level of the injection monitoring signal is yet to be identified at this point in time). The port level of the injection monitoring signal is then identified as Hi with a processing delay time from the time of occurrence of the edge-triggered interrupt call. In this manner, the time of occurrence of the edge-triggered interrupt call (the stored time) is read in as the fuel injection ending time.

Next, the microcomputer 21 calculates the supply period of the driving current in each injection as a current supply monitoring period INJM from the fuel injection starting time and the fuel injection ending time of that injection.

In the present embodiment, the microcomputer 21, as well as reads in the fuel injection starting time and the fuel injection ending time of each injection, acquires a pressure (rail pressure PCR) of the fuel supplied to the injector 14. Here, the rail pressure PCR acquired at the end of each injection is acquired as an injection pressure Pcrinj for that injection.

In the present embodiment, the injection amount calculating process P21 and the second malfunction determining process P22 are carried out as crank-angle-triggered interrupting processes in a prescribed period after the fuel injection is ended.

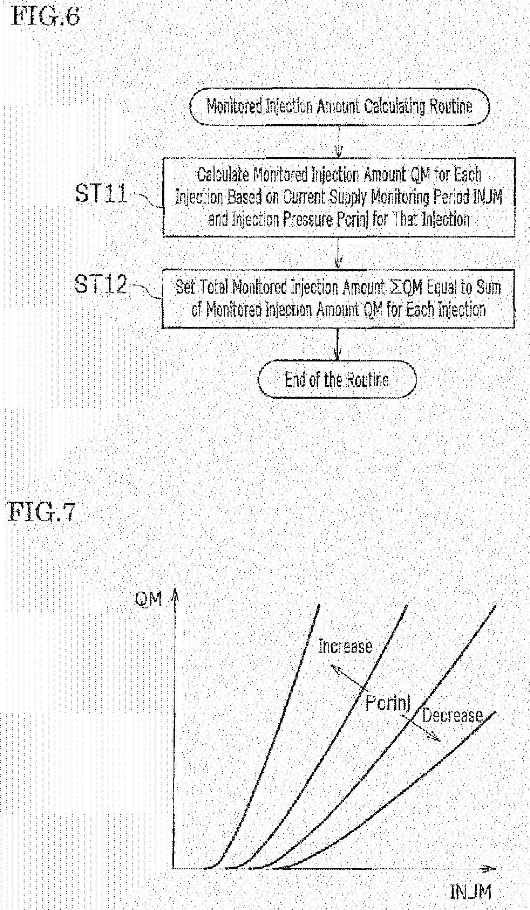

Next will be described the injection amount calculating process P21 in more detail. In the injection amount calculating process P21, the monitored injection amount is calculated based on the supply period of the driving current measured in the actual current supply period measuring process P20 (the injection period calculated from the time acquired in the time acquiring process P20a and the port level detected in the port level detecting process P20b). A processing part that implements the injection amount calculating process P21 is referred to as injection amount calculating means in the present invention. Specifically, the injection amount calculating process P21 is implemented through a monitored injection amount calculating routine shown in Figure 6. The routine is implemented as a crank-angle-triggered interrupting process by the microcomputer 21 after a series of fuel injections from the injector 14 is ended.

As illustrated in Figure 6, as the monitored injection amount calculating routine is started, an injection amount for each injection is first calculated as a monitored injection amount QM in step ST11 based on the current supply monitoring period INJM and the injection pressure Pcrinj for that injection. The microcomputer 21 has stored therein a calculation map representing a relationship between the current supply monitoring period INJM and the monitored injection amount QM for various values of the injection pressure Pcrinj as shown in Figure 7. The monitored injection amount QM is calculated here by referring to this calculation map.

Subsequently, in step ST12, the sum of the monitored injection amount QM for each injection is designated as a total monitored injection amount ∑QM. Thereafter, the current round of implementation of the routine is ended. The total monitored injection amount ∑QM thus determined is a measure of the total amount of the fuel actually injected from the injector 14 in the current series of fuel injections (from the pilot injection through the after-injection).

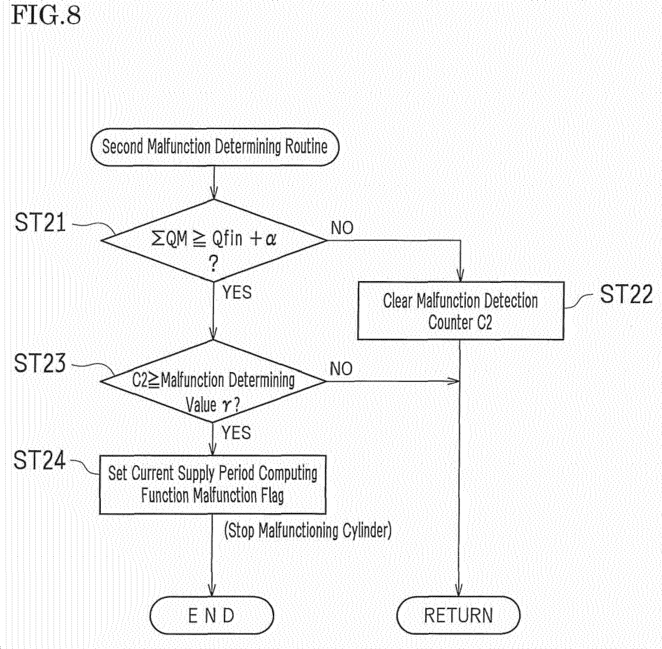

Next will be described the second malfunction determining process P22 in more detail. In the second malfunction determining process P22, the monitored injection amount and the required injection amount Qfin are compared to monitor whether or not the fuel injection amount control is being normally performed. A processing part that implements the second malfunction determining process P22 is referred to as monitoring means in the present invention. Specifically, the second malfunction determining process P22 is implemented through a second malfunction determining routine shown in Figure 8. The routine is implemented by the microcomputer 21 subsequently to the monitored injection amount calculating routine described above.

As illustrated in Figure 8, as the second malfunction determining routine is started, it is first determined in step ST21 whether or not there is a discrepancy between the total monitored injection amount ∑QM calculated in the injection amount calculating process P21 and the required injection amount Qfin computed in the fuel injection amount control routine R1. Excess values of the total monitored injection amount ∑QM are the only malfunction that necessitates a fail-safe process in the present embodiment. Therefore, in this embodiment, it is determined that there has occurred a discrepancy between the total monitored injection amount ∑QM and the required injection amount Qfin when the total monitored injection amount ∑QM is greater than the required injection amount Qfin by an amount that is greater than or equal to the prescribed value α.

If there is no discrepancy (if the result of step ST21 is "NO"), the value of a malfunction detection counter C2 is cleared in step ST22, before the routine returns. Note that the value of the malfunction detection counter C2 is automatically incremented every time a period of a fixed length elapses. Therefore, the value of the malfunction detection counter C2 gradually increases with the duration of the discrepancy between the total monitored injection amount ∑QM and the required injection amount Qfin.

On the other hand, if it is determined that there is a discrepancy between the total monitored injection amount ∑QM and the required injection amount Qfin (if the result of step ST21 is "YES"), it is determined in step ST23 whether or not the malfunction detection counter C2 is greater than or equal to a prescribed malfunction determining value γ. If the malfunction detection counter C2 is less than the malfunction determining value γ (if the result of step ST23 is "NO"), the routine simply returns.

On the other hand, if the malfunction detection counter C2 is greater than or equal to the malfunction determining value γ (if the result of step ST23 is "YES"), a current supply period computing function malfunction flag is set in step ST24, before the current round of implementation of the routine is ended. When the current supply period computing function malfunction flag is set, the microcomputer 21 stops the cylinder in which the malfunction has occurred, in other words, suspends fuel injection to that cylinder, as the fail-safe process.

### Data Acquisition Permission Flag

A feature of the present embodiment is the storing of the data acquisition permission flag in the microcomputer 21. The data acquisition permission flag is provided for the purpose of specifying whether or not the reading as each of the injection starting time and the injection ending time, both derived from the injection monitoring signal, is permitted, as will be described later in detail.

As described above, the injection monitoring signal from the EDU 23 is fed to the single input port Port1 of the microcomputer 21. Therefore, if the port level of the injection monitoring signal from the EDU 23 changes (if there occurs an edge-triggered interrupt call in the injection monitoring signal), there will be a processing delay from the time when the microcomputer 21 receives the injection monitoring signal from the EDU 23 (from the time of occurrence of the edge-triggered interrupt call) until the time when the port level of the injection monitoring signal is identified as either Hi (a rise of the injection monitoring signal) or Lo (a fall of the injection monitoring signal) (the processing delay time is the period from the time of occurrence of the edge-triggered interrupt call to the time of identifying of the port level).

In conventional art, as described earlier, if the port level of the injection monitoring signal, after a change of the port level, changes again within a short period of time, and if this port level changing period (the period from the time when the port level changes to the time when the port level changes again) is shorter than the processing delay time, the port level of the injection monitoring signal may not be able to be accurately identified, and the fuel injection amount may not be able to be accurately calculated.

In view of this issue, in the present embodiment, (i) the microcomputer 21 has stored therein the data acquisition permission flag, (ii) the data acquisition permission flag is switched and stored in the port level storing process P20c in the actual current supply period measuring process P20, and (iii) it is specified in accordance with the state of the data acquisition permission flag (either ON state or OFF state) whether or not the reading as each of the injection starting time and the injection ending time, both derived from the injection monitoring signal, is permitted. The following will give more specific description.

The data acquisition permission flag is switched between ON and OFF in accordance with the port level of the injection monitoring signal when the port level of the injection monitoring signal is identified as Hi or Lo (after the processing delay time has elapsed). Specifically, the data acquisition permission flag is switched from OFF to ON when it is detected that the port level of the injection monitoring signal has switched from Hi to Lo. The data acquisition permission flag is switched from ON to OFF when it is detected that the port level of the injection monitoring signal has switched from Lo to Hi.

Therefore, if the data acquisition permission flag is OFF, the data acquisition permission flag is turned ON when the port level of the injection monitoring signal is identified as Lo (when the port level changes from Hi to Lo). On the other hand, if the data acquisition permission flag is ON, the data acquisition permission flag is turned OFF when the port level of the injection monitoring signal is identified as Hi (when the port level changes from Lo to Hi).

In other words, if the data acquisition permission flag is OFF when the port level of the injection monitoring signal goes Lo in response to the switching state of the fuel injection being switched from fuel injection suspension to fuel injection starting, the data acquisition permission flag is switched from OFF to ON. If the data acquisition permission flag is switched from OFF to ON in this manner, the time when the port level of the injection monitoring signal changes (the time of occurrence of an edge-triggered interrupt call) is recognized as the fuel injection starting time.

Consequently, even if the port level of the injection monitoring signal goes Lo, the data acquisition permission flag is not switched if the data acquisition permission flag is ON. When this is actually the case, even if the port level of the injection monitoring signal changes, the time when the port level of the injection monitoring signal changes is not recognized as the fuel injection starting time. In other words, the time acquired in the time acquiring process P20a is not recognized as the fuel injection starting time and not used to calculate the supply period of the driving current.

In addition, if the data acquisition permission flag is ON when the port level of the injection monitoring signal goes Hi in response to the switching state of the fuel injection being switched from fuel injection state to fuel injection ending, the data acquisition permission flag is switched from ON to OFF. If the data acquisition permission flag is switched from ON to OFF in this manner, the time when the port level of the injection monitoring signal changes (the time of occurrence of an edge-triggered interrupt call) is recognized as the fuel injection ending time.

Consequently, even if the port level of the injection monitoring signal goes Hi, the data acquisition permission flag is not switched if the data acquisition permission flag is OFF. When this is actually the case, even if the port level of the injection monitoring signal changes, the time when the port level of the injection monitoring signal changes is not recognized as the fuel injection ending time. In other words, the time acquired in the time acquiring process P20a is not recognized as the fuel injection ending time and not used to calculate the supply period of the driving current.

In this manner, only if the port level detected in the port level detecting process P20b differs from the port level corresponding to the current data acquisition permission flag stored in the port level storing process P20c when the port level of the injection monitoring signal received at the input port Port1 switches between Lo and Hi (only if the data acquisition permission flag is OFF in accordance with Hi port level when the port level goes Lo or if the data acquisition permission flag is ON in accordance with Lo port level when the port level goes Hi), the time acquired in the time acquiring process P20a is read in as either the fuel injection starting time or the fuel injection ending time and established as the time to be used to calculate the injection period.

### Flag Switching Process and Injection Time Reading Process

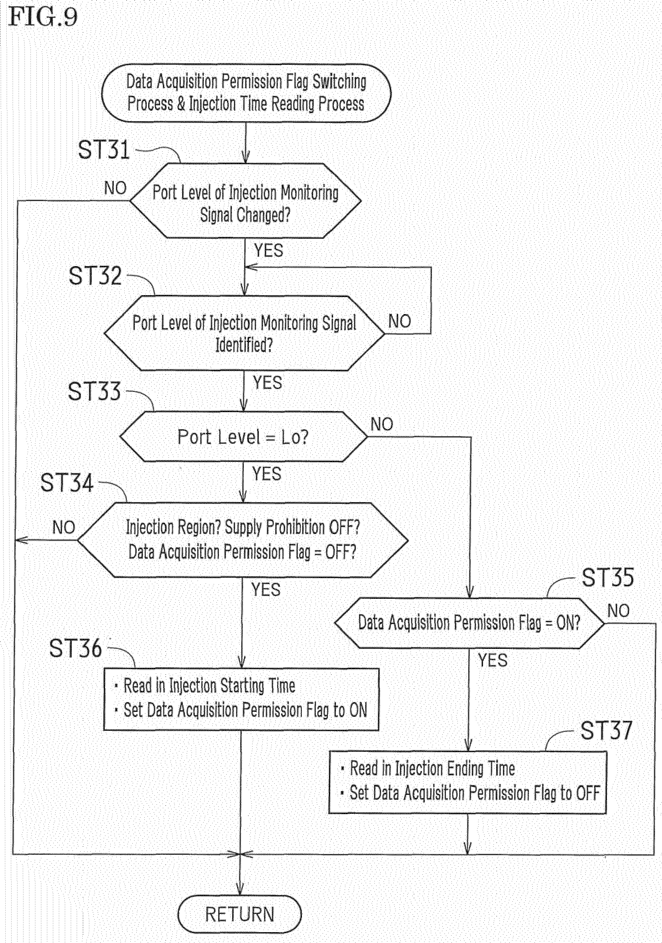

Next will be described a data acquisition permission flag switching process and the injection time reading process in reference to a flow chart in Figure 9.

First, it is determined in step ST31 whether or not the port level of the injection monitoring signal has changed (whether or not there has occurred an edge-triggered interrupt call). If the port level of the injection monitoring signal has not changed (hence, the result of step ST31 is "NO"), the process returns without switching the data acquisition permission flag and without reading in an injection time.

If the port level of the injection monitoring signal has changed (hence, the result of step ST31 is "YES"), it is determined in step ST32 whether or not the port level of the injection monitoring signal has been identified, that is, whether or not the processing delay time has elapsed and the port level of the injection monitoring signal is identified. If the port level of the injection monitoring signal is yet to be identified (hence, the result of step ST32 is "NO"), the process is suspended until the port level of the injection monitoring signal is identified.

If the processing delay time has elapsed and the port level of the injection monitoring signal is identified (hence, the result of step ST32 is "YES"), the process proceeds to step ST33 where it is determined whether or not the identified port level is Lo (a fall of the injection monitoring signal). If the identified port level is Lo (hence, the result of step ST33 is "YES"), the process proceeds to step ST34. On the other hand, if the identified port level is Hi (hence, the result of step ST33 is "NO"), the process proceeds to step ST35.

In step ST34, it is determined whether or not conditions (1) to (3) below are all satisfied.

### (1) Crank angle position is in an injection region.

### (2) Supply prohibition is OFF.

### (3) The data acquisition permission flag is OFF.

Condition (1) is satisfied when the current crank angle position is in a fuel injection period for the injector 14 of a target cylinder. Condition (2) is satisfied when not in control state where the electric current supply to the injector 14 is prohibited (supply prohibition; for example, fuel supply is cut off in response to an "OFF" accelerator status).

If these conditions (1) to (3) are satisfied (hence, the result of step ST34 is "YES"), the process proceeds to step ST36 where the time when the port level of the injection monitoring signal has changed (the time of occurrence of an edge-triggered interrupt call) is read in as the fuel injection starting time. In addition, the data acquisition permission flag is switched from OFF to ON. Thereafter, the process returns.

On the other hand, if not all the conditions are satisfied (hence, the result of step ST34 is "NO"), the process returns without switching the data acquisition permission flag and without reading in an injection time.

In step ST35, it is determined whether or not the data acquisition permission flag is ON. If the data acquisition permission flag is ON (hence, the result of step ST35 is "YES"), the process proceeds to step ST37 where the time when the port level of the injection monitoring signal has changed (the time of occurrence of an edge-triggered interrupt call) is read in as the fuel injection ending time. In addition, the data acquisition permission flag is switched from ON to OFF. Thereafter, the process returns.

On the other hand, if the data acquisition permission flag is OFF (hence, the result of step ST35 is "NO"), the process returns without switching the data acquisition permission flag and without reading in an injection time.

Because this injection time reading process is carried out, the EDU 23 (especially, that processing part which implements the monitoring signal generating process P6) and the microcomputer 21 (especially, those processing parts which implement the actual current supply period measuring process P20, the injection amount calculating process P21, and the second malfunction determining process P22) constitute a monitoring device for an engine control unit in accordance with the present invention. This monitoring device receives the crank angle, the accelerator pedal operation amount, the engine water temperature, and the rail pressure as input signals. The monitoring device outputs as an output signal a monitoring result signal indicating whether or not the fuel injection amount control is being normally performed (e.g., a monitoring result is written to a diagnosis (not shown)).

### Where Short Interval is Present

Next will be described a situation where there has occurred a short interval (where the EDU 23 outputs an injection instructing signal with an extremely short fuel-injection-suspending period), presuming that the data acquisition permission flag switching process and the injection time reading process are carried out as described above.

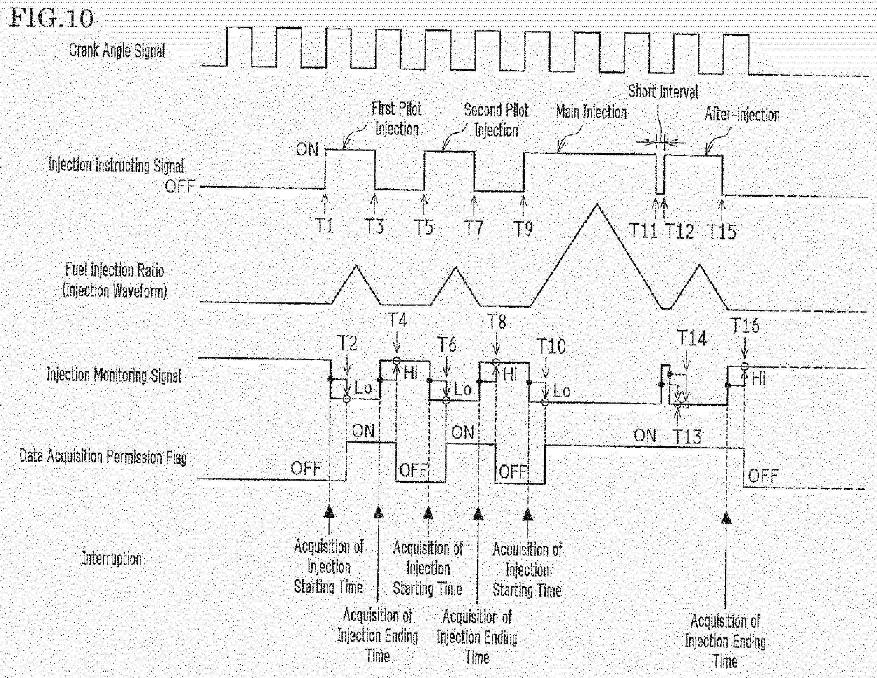

Figure 10 is a timing chart illustrating, as an example for a case where a short interval occurs, changes of the crank angle signal, the injection instructing signal, the fuel injection ratio, the injection monitoring signal, and the data acquisition permission flag and injection time acquiring timings.

The timing chart illustrates sequential implementation of two pilot injections (a first pilot injection and a second pilot injection), a main injection, and an after-injection, where the EDU 23 outputs an injection instructing signal causing a short interval to occur between the main injection and the after-injection.

According to the waveforms in this Figure 10, the injection instructing signal goes ON (to start the first pilot injection; the driving current rises) at time T1 in the figure, and the injection monitoring signal falls in response to this (with a slight delay). At this timing, the time when the injection monitoring signal has fallen is stored. Subsequently to the fall of the injection monitoring signal (occurrence of an edge-triggered interrupt call), the port level of the injection monitoring signal is identified as Lo with a processing delay time (i.e., at time T2 in the figure) (the result of step ST33 is "YES" in the flow chart in Figure 9). Because the data acquisition permission flag is OFF until (immediately before) it is determined that the port level of the injection monitoring signal is Lo (the result of step ST34 is "YES" in the flow chart in Figure 9), the time when the port level of the injection monitoring signal has changed (the time of occurrence of an edge-triggered interrupt call) is read in as the fuel injection starting time. In addition, the data acquisition permission flag is switched from OFF to ON (step ST36 in the flow chart in Figure 9).

The injection instructing signal goes OFF at time T3 in the figure (to suspend the first pilot injection; the driving current falls). In response to this, the injection monitoring signal rises (with a slight delay). At this timing, the time when the injection monitoring signal has risen is stored. Subsequently to the rise of the injection monitoring signal (occurrence of an edge-triggered interrupt call), the port level of the injection monitoring signal is identified as Hi with a processing delay time (i.e., at time T4 in the figure) (the result of step ST33 is "NO" in the flow chart in Figure 9). Because the data acquisition permission flag is ON until (immediately before) it is determined that the port level of the injection monitoring signal is Hi (the result of step ST35 is "YES" in the flow chart in Figure 9), the time when the port level of the injection monitoring signal has changed (the time of occurrence of an edge-triggered interrupt call) is read in as the fuel injection ending time. In addition, the data acquisition permission flag is switched from ON to OFF (step ST37 in the flow chart in Figure 9).

The injection period of the first pilot injection is calculated by reading in the fuel injection starting time and the fuel injection ending time in this manner.

The same description applies mutatis mutandis to the second pilot injection. Specifically, the injection instructing signal goes ON at time T5 in the figure. The port level of the injection monitoring signal is identified as Lo at time T6 in the figure. Accordingly, the time of occurrence of an edge-triggered interrupt call corresponding to time T5 is read in as the fuel injection starting time. Meanwhile, the injection instructing signal goes OFF at time T7 in the figure. The port level of the injection monitoring signal is identified as Hi at time T8 in the figure. Accordingly, the time of occurrence of an edge-triggered interrupt call corresponding to time T7 is read in as the fuel injection ending time. In the main injection, the injection instructing signal goes ON at time T9 in the figure, and the port level of the injection monitoring signal is identified as Lo at time T10 in the figure. Accordingly, the time of occurrence of an edge-triggered interrupt call corresponding to time T9 is read in as the fuel injection starting time.

According to these waveforms, there occurs a short interval between the ending time of the main injection (time T11 in the figure) and the starting time of the after-injection (time T12 in the figure), and the EDU 23 outputs an injection instructing signal causing a short interval to occur. In other words, the injection instructing signal, after going OFF, goes ON within a short period, causing a short interval to occur. In that case, the injection monitoring signal falls before the processing delay time elapses (at time T13) following the rise of the injection monitoring signal (in response to the injection instructing signal going OFF at time T11); it follows that the port level of the injection monitoring signal is identified as Lo (the result of step ST33 in the flow chart in Figure 9 is "YES"). When such a situation happens, in the present embodiment, no time is read in as a fuel injection time unless the data acquisition permission flag is OFF (unless the result of step ST34 in the flow chart in Figure 9 is "YES"). In addition, the data acquisition permission flag remains ON.

In other words, where there occurs a short interval, no time is read in as a fuel injection time related to the presence of the short interval in the injection monitoring signal.

Similarly, when the processing delay time has elapsed (at time T14) following the fall of the injection monitoring signal (in response to the injection instructing signal going ON at time T12), it again follows that the port level of the injection monitoring signal is identified as Lo (the result of step ST33 in the flow chart in Figure 9 is "YES"). As described above, in the present embodiment, no time is read in as a fuel injection time unless the data acquisition permission flag is OFF (unless the result of step ST34 in the flow chart in Figure 9 is "YES"). In addition, the data acquisition permission flag remains ON. Therefore, again in this situation where there occurs a short interval, no time is read in as a fuel injection time related to the presence of the short interval in the injection monitoring signal.

In the after-injection, the injection instructing signal goes OFF at time T15 in the figure, and the port level of the injection monitoring signal is identified as Hi at time T16 in the figure. Accordingly, the time of occurrence of an edge-triggered interrupt call corresponding to time T15 is read in as the fuel injection ending time.

In conventional art, where there occurs a short interval, every change of the injection monitoring signal that occurs in response to the presence of the short interval is recognized. The port level of the injection monitoring signal can therefore be identified successively as Lo; the fuel injection period and the fuel injection amount may not be accurately calculated.

In the present embodiment, even if the port level of the injection monitoring signal received at the input port Port1 of the microcomputer 21 is identified as Lo, no time is read in as a fuel injection time when the data acquisition permission flag is ON. Therefore, even if there occurs a short interval, the port level of the injection monitoring signal appears to alternate between Lo and Hi as identified for particular times to be used to calculate the injection period (those times which are established as times to be used to calculate the injection period) (the port level, identified only for times T2, T4, T6, T8, T10, and T16 in Figure 10, appears to alternate between Lo and Hi). This configuration prevents the fuel injection period from being calculated inaccurately due to the port level of the injection monitoring signal being identified identically as Hi or Lo for the times that are read in continually. As a result, the fuel injection amount can be accurately calculated, thereby circumventing incorrect determination/identification.

Furthermore, where there occurs a short interval, a needle in the injector 14, having started moving from an injection position (retreated position) toward an injection suspending position (forward position), will likely start moving toward the injection position before reaching the injection suspending position, which means that fuel is probably being continuously injected without suspension. Therefore, even if there occurs a short interval, fuel injection will likely be continued during that interval without being suspended. In the present embodiment, as described above, the fuel injection starting time and the fuel injection ending time of the short interval are not read in. The fuel injection amount can hence be calculated by regarding fuel injection as being continued during the short interval. This configuration also contributes to accurate calculation of the fuel injection amount.

In addition, in the present embodiment, the fuel injection amount control can be monitored accurately through the single input port Port1 of the microcomputer 21. Furthermore, there is no need for means that directly detects the operation state of the injector 14 (e.g., a sensor that detects the position of the needle in the injector 14) as a configuration that monitors whether or not the injector 14 is being normally driven; this monitoring configuration can be simplified.

### Other Embodiments

In the embodiment described above, the information stored in the port level storing process P20c is the data acquisition permission flag. This is by no means intended to be limiting on the scope of the present invention; alternatively, when a post-switching port level is detected in the port level detecting process P20b, the post-switching port level may be stored as is.

In addition, in the embodiment above, the data acquisition permission flag is switched from OFF to ON in response to a detection that the port level of the injection monitoring signal is switched from Hi to Lo, and the data acquisition permission flag is switched from ON to OFF in response to a detection that the port level of the injection monitoring signal is switched from Lo to Hi. This is by no means intended to be limiting on the scope of the present invention; alternatively, the data acquisition permission flag may be switched from ON to OFF in response to a detection that the port level of the injection monitoring signal is switched from Hi to Lo, and the data acquisition permission flag may be switched from OFF to ON in response to a detection that the port level of the injection monitoring signal is switched from Lo to Hi. In this alternative configuration, even if the port level of the injection monitoring signal goes Lo, a change of the port level of the injection monitoring signal is not recognized as indicating a fuel injection starting time if the data acquisition permission flag is OFF. In addition, even if the port level of the injection monitoring signal goes Hi, a change of the port level of the injection monitoring signal is not recognized as indicating a fuel injection ending time if the data acquisition permission flag is ON.

The embodiments discussed above describe applications of the present invention to an engine control unit for a diesel engine in a vehicle. This is by no means intended to be limiting on the scope of the present invention; alternatively, the present invention may be applied to an engine control unit for a gasoline engine. As a further alternative, the present invention may be applied to an engine control unit for a non-vehicle engine.

According to the present invention, in cases where the EDU 23 outputs an injection instructing signal that specifies a fuel injection period (period from the start to the end of a fuel injection) that is extremely short (shorter than the processing delay time), the port level of the injection monitoring signal is not identified successively as Hi for continual edge-triggered interrupt calls. In other words, even in the presence of an extremely short fuel injection period, the port level appears to alternate between Lo and Hi, and the fuel injection amount can be accurately calculated.

### Industrial Applicability

The present invention is applicable to monitoring devices that monitor whether or not an engine control unit for a diesel engine is normally performing fuel injection amount control.

### Reference Signs List

- 14: Injector (Fuel Injecting Valve)
- 20: Engine Control Unit
- 21: Microcomputer (Central Processing Unit)
- 23: EDU (Injection Monitoring Signal Outputting Means)
- P20: Actual Current Supply Period Measuring Process
- P20a: Time Acquiring Process (Time Acquiring Means)
- P20b: Port Level Detecting Process (Port Level Detecting Means)
- P20c: Port Level Storing Process (Port Level Storing Means)
- P21: Injection Amount Calculating Process (Injection Amount Calculating Means)
- P22: Second Malfunction Determining Process (Monitoring Means)
- Port1: Input Port

## Claims

1. A monitoring device for an engine control unit (20),
the monitoring device configured to monitor, by comparing a required fuel injection amount determined according to an operation state of an internal combustion engine and a monitored injection amount calculated using an injection monitoring signal generated from a supply period of a driving current for a fuel injecting valve, whether or not fuel injection amount control is being normally performed,
the monitoring device being **characterized by** comprising:
injection monitoring signal outputting means configured to output the injection monitoring signal, the signal level switching from Lo to Hi or from Hi to Lo in response to a switching of the driving current between a value at which fuel injection from the fuel injecting valve is performed and a value at which the fuel injection is suspended; and
a central processing unit (21) with an input port receiving the injection monitoring signal from the injection monitoring signal outputting means,
the central processing unit including:
time acquiring means configured to acquire a time at which a port level, which is the signal level of the injection monitoring signal received by the input port, has switched from Lo to Hi or from Hi to Lo;
port level detecting means configured to detect a port level at a certain delay after the switching from Lo to Hi or from Hi to Lo of the port level of the injection monitoring signal received by the input port;
port level storing means configured to store, in response to a detection of the port level after the switching by the port level detecting means, either the port level after the switching or a flag value that is set in accordance with the port level after the switching;
injection amount calculating means configured to calculate the monitored injection amount based on the time acquired by the time acquiring means and an injection period calculated from the port level detected by the port level detecting means; and
monitoring means configured to monitor, by comparing the monitored injection amount calculated by the injection amount calculating means and the required fuel injection amount, whether or not the fuel injection amount control is being normally performed,
the central processing unit being configured to acquire, by the time acquiring means, a time at which the port level of the injection monitoring signal has switched from Hi to Lo as a fuel injection starting time, and to acquire, by the time acquiring means, a time at which the port level of the injection monitoring signal has switched from Lo to Hi as a fuel injection ending time, so as to calculate the injection period based on the fuel injection starting time and the fuel injection ending time acquired by the time acquiring means,
the central processing unit being configured to, when the port level of the injection monitoring signal received by the input port has switched from Lo to Hi or from Hi to Lo: establish the time acquired by the time acquiring means as a time to be used to calculate the injection period if the port level detected by the port level detecting means differs from either the port level currently stored in the port level storing means or the port level that is in accordance with the flag value currently stored in the port level storing means; and not use the time acquired by the time acquiring means to calculate the injection period if the port level detected by the port detecting means matches either the port level currently stored in the port level storing means or the port level that is in accordance with the flag value currently stored in the port level storing means.

2. The monitoring device as set forth in claim 1, wherein the central processing unit is configured to, upon establishing the time acquired by the time acquiring means as the time to be used to calculate the injection period, switch either the port level that the port level storing means stores or the flag value that is set in accordance with that port level.

## Patentansprüche

1. Überwachungsvorrichtung für ein Motorsteuergerät (20),
wobei die Überwachungsvorrichtung so konfiguriert ist, dass sie durch Vergleichen einer benötigten Kraftstoffeinspritzmenge, die gemäß eines Betriebszustands einer Verbrennungskraftmaschine bestimmt wird, und einer überwachten Einspritzmenge, die durch Verwenden eines Einspritzüberwachungssignals berechnet wird, das aus einer Zuführperiode eines Antriebsstroms für ein Kraftstoffeinspritzventil erzeugt wurde, überwacht, ob eine Kraftstoffeinspritzmengensteuerung normal durchgeführt wird oder nicht,
wobei die Überwachungsvorrichtung **dadurch gekennzeichnet ist, dass** sie aufweist:
eine Einspritzüberwachungssignalausgabeeinrichtung, die so konfiguriert ist, dass sie das Einspritzüberwachungssignal ausgibt, wobei der Signalpegel als Reaktion auf ein Umschalten des Antriebsstroms zwischen einem Wert, bei dem eine Kraftstoffeinspritzung von dem Kraftstoffeinspritzventil durchgeführt wird, und einem Wert, bei dem die Kraftstoffeinspritzung ausgesetzt ist, von Niedrig auf Hoch oder von Hoch auf Niedrig umgeschaltet wird; und
eine zentrale Recheneinheit (21) mit einem Eingangsport, der das Einspritzüberwachungssignal von der Einspritzüberwachungssignalausgabeeinrichtung empfängt,
wobei die zentrale Recheneinheit beinhaltet:
eine Zeiterhaltungseinrichtung, die so konfiguriert ist, dass sie eine Zeit erhält, bei der ein Portpegel, bei dem es sich um den Signalpegel des Einspritzüberwachungssignals handelt, das durch den Eingangsport empfangen wird, von Niedrig auf Hoch oder von Hoch auf Niedrig umgeschaltet wurde;
eine Portpegelerfassungseinrichtung, die so konfiguriert ist, dass sie einen Portpegel mit einer bestimmten Verzögerung erfasst, nachdem das Umschalten von Niedrig auf Hoch oder von Hoch auf Niedrig des Portpegels des Einspritzüberwachungssignals, das von dem Eingangsport empfangen wird, stattgefunden hat;
eine Portpegelspeichereinrichtung, die so konfiguriert ist, dass sie als Reaktion auf eine Erfassung des Portpegels nach dem Umschalten durch die Portpegelerfassungseinrichtung entweder den Portpegel nach dem Umschalten oder einen Flaggenwert, der in Übereinstimmung mit dem Portpegel nach dem Umschalten eingestellt wird, speichert;
eine Einspritzmengenberechnungseinrichtung, die so konfiguriert ist, dass sie die überwachte Einspritzmenge auf Basis der Zeit, die von der Zeiterhaltungseinrichtung erhalten wird, und einer Einspritzperiode, die aus dem Portpegel, der durch die Portpegelerfassungseinrichtung erfasst wird, berechnet;
und
eine Überwachungseinrichtung, die so konfiguriert ist, dass sie durch Vergleichen der überwachten Einspritzmenge, die durch die Einspritzmengenberechnungseinrichtung berechnet wird, und der benötigten Kraftstoffeinspritzmenge überwacht, ob die Kraftstoffeinspritzmengensteuerung normal durchgeführt wird oder nicht,
wobei die zentrale Recheneinheit so konfiguriert ist, dass sie durch die Zeiterhaltungseinrichtung eine Zeit, zu der der Portpegel des Einspritzüberwachungssignals von Hoch auf Niedrig umgeschaltet wird, als eine Kraftstoffeinspritzstartzeit erhält, und dass sie durch die Zeiterhaltungseinrichtung eine Zeit, zu der der Portpegel des Einspritzüberwachungssignals von Niedrig auf Hoch umgeschaltet wird, als eine Kraftstoffeinspritzendzeit erhält, so dass sie die Einspritzperiode auf Basis der Kraftstoffeinspritzstartzeit und der Kraftstoffeinspritzendzeit, die durch die Zeiterhaltungseinrichtung erhalten werden, berechnet,
wobei die zentrale Recheneinheit so konfiguriert ist, dass sie, wenn der Portpegel des Einspritzüberwachungssystems, der durch den Eingangsport empfangen wird, von Niedrig auf Hoch oder von Hoch auf Niedrig umgeschaltet wurde, die Zeit, die von der Zeiterhaltungseinrichtung erhalten wird, als eine Zeit bestimmt, die verwendet werden soll, um die Einspritzperiode zu berechnen, falls sich der Portpegel, der durch die Portpegelerfassungseinrichtung erfasst wird, entweder von dem gegenwärtig in der Portpegelspeichereinrichtung gespeicherten Portpegel oder dem Portpegel, der sich mit dem Flaggenwert in Übereinstimmung befindet, der gegenwärtig in der Portpegelspeichereinrichtung gespeichert ist, unterscheidet; und die Zeit, die durch die Zeiterhaltungseinrichtung erhalten wird, nicht verwendet, um die Einspritzperiode zu berechnen, falls der von der Portpegelerfassungseinrichtung erfasste Portpegel entweder zu dem Portpegel, der gegenwärtig in der Portpegelspeichereinrichtung gespeichert ist, oder dem Portpegel, der sich mit dem Flaggenwert, der gegenwärtig in der Portpegelspeichereinrichtung gespeichert ist, in Übereinstimmung befindet, passt.

2. Überwachungsvorrichtung nach Anspruch 1, wobei die zentrale Recheneinheit so konfiguriert ist, dass sie beim Bestimmen der Zeit, die durch die Zeiterhaltungseinrichtung als die Zeit erfasst wird, die zu verwenden ist, um die Einspritzperiode zu berechnen, entweder den Portpegel, den die Portpegelspeichereinrichtung speichert oder den Flaggenwert, der in Übereinstimmung mit diesem Portpegel eingestellt wird, umschaltet.

## Revendications

1. Dispositif de surveillance pour une unité de commande de moteur (20),
le dispositif de surveillance étant configuré pour surveiller, en comparant une quantité d'injection de carburant requise déterminée conformément à un état de fonctionnement d'un moteur à combustion interne et une quantité d'injection surveillée calculée en utilisant un signal de surveillance d'injection généré à partir d'une période de fourniture d'un courant de commande pour une soupape d'injection de carburant, si la commande de quantité d'injection de carburant est effectuée normalement ou non,
le dispositif de surveillance étant **caractérisé en ce qu'**il comprend :
des moyens de sortie de signal de surveillance d'injection configurés pour sortir le signal de surveillance d'injection, le niveau de signal commutant du niveau bas au niveau haut ou du niveau haut au niveau bas en réponse à une commutation du courant de commande entre une valeur à laquelle l'injection de carburant à partir de la soupape d'injection de carburant est effectuée et une valeur à laquelle l'injection de carburant est suspendue ; et
une unité centrale (21) avec un port d'entrée recevant le signal de surveillance d'injection provenant des moyens de sortie de signal de surveillance d'injection,
l'unité centrale comprenant :
des moyens d'acquisition d'instant configurés pour acquérir un instant auquel un niveau de port, qui est le niveau de signal du signal de surveillance d'injection reçu par le port d'entrée, a commuté du niveau bas au niveau haut ou du niveau haut au niveau bas ;
des moyens de détection de niveau de port configurés pour détecter un niveau de port avec un certain retard après la commutation du niveau bas au niveau haut ou du niveau haut au niveau bas du niveau de port du signal de surveillance d'injection reçu par le port d'entrée ;
des moyens de mémorisation de niveau de port configurés pour mémoriser, en réponse à une détection du niveau de port après la commutation par les moyens de détection de niveau de port, soit le niveau de port après la commutation, soit une valeur d'indicateur qui est établie conformément au niveau de port après la commutation ;
des moyens de calcul de quantité d'injection configurés pour calculer la quantité d'injection surveillée sur la base de l'instant acquis par les moyens d'acquisition d'instant et d'une période d'injection calculée à partir du niveau de port détecté par les moyens de détection de niveau de port ; et
des moyens de surveillance configurés pour surveiller, en comparant la quantité d'injection surveillée calculée par les moyens de calcul de quantité d'injection et la quantité d'injection de carburant requise, si la commande de quantité d'injection de carburant est effectuée normalement ou non,
l'unité centrale étant configurée pour acquérir, par les moyens d'acquisition d'instant, un instant auquel le niveau de port du signal de surveillance d'injection a commuté du niveau haut au niveau bas en tant qu'instant de début d'injection de carburant, et pour acquérir, par les moyens d'acquisition d'instant, un instant auquel le niveau de port du signal de surveillance d'injection a commuté du niveau bas au niveau haut en tant qu'instant de fin d'injection de carburant, de manière à calculer la période d'injection sur la base de l'instant de début d'injection de carburant et de l'instant de fin d'injection de carburant acquis par les moyens d'acquisition d'instant,
l'unité centrale étant configurée pour, lorsque le niveau de port du signal de surveillance d'injection reçu par le port d'entrée a commuté du niveau bas au niveau haut ou du niveau haut au niveau bas, établir l'instant acquis par les moyens d'acquisition d'instant en tant qu'instant à utiliser pour calculer la période d'injection si le niveau de port détecté par les moyens de détection de niveau de port diffère soit du niveau de port actuellement mémorisé dans les moyens de mémorisation de niveau de port, soit du niveau de port qui est conforme à la valeur d'indicateur actuellement mémorisée dans les moyens de mémorisation de niveau de port ; et pour ne pas utiliser l'instant acquis par les moyens d'acquisition d'instant pour calculer la période d'injection si le niveau de port détecté par les moyens de détection de port correspond soit au niveau de port actuellement mémorisé dans les moyens de mémorisation de niveau de port, soit au niveau de port qui est conforme à la valeur d'indicateur actuellement mémorisée dans les moyens de mémorisation de niveau de port.

2. Dispositif de surveillance selon la revendication 1, dans lequel l'unité centrale est configurée pour, lors de l'établissement de l'instant acquis par les moyens d'acquisition d'instant en tant qu'instant à utiliser pour calculer la période d'injection, commuter soit le niveau de port que les moyens de mémorisation de niveau de port mémorisent, soit la valeur d'indicateur qui est établie conformément à ce niveau de port.
